# EUROPÄISCHE PATENTANMELDUNG

(11) **EP 2 206 881 A2**
(43) Veröffentlichungstag der Anmeldung: **14.07.2010**
(21) Anmeldenummer: 09016094.6
(22) Anmeldetag: 29.12.2009
(51) Int. Cl.: E21B 43/16, E21B 47/10

(54) **Gasaktivitätsbestimmung in Böden**

(30) Priorität: 08.01.2009 DE 102009004104
(71) Anmelder: Linde Aktiengesellschaft, 80331 München (DE)
(72) Erfinder: Heisel, Michael, 82049 Pullach (DE)

(57) **Zusammenfassung**

Es wird ein Verfahren zum Einbringen eines Treibgases in Böden beschrieben, wobei dem Treibgas ein oberhalb des Bodens bzw. der Erdoberfläche analysierbares Spurengas zugesetzt wird.

Erfindungsgemäß wird als Spurengas Wasserstoff verwendet. Hierbei beträgt der Anteil des Spurengases Wasserstoff an dem Treibgas-Spurengas-Gemisch maximal 10 Vol-%, vorzugsweise maximal 5 Vol-%.

## Beschreibung

Die Erfindung betrifft ein Verfahren zum Einbringen eines Treibgases in Böden, wobei dem Treibgas ein oberhalb des Bodens bzw. der Erdoberfläche analysierbares Spurengas zugesetzt wird.

Unter dem Begriff "Boden" bzw. "Böden" seien nachfolgend alle Arten von Böden, Gesteinen und Untergrund zu verstehen, in die - wie nachstehend erläutert - zu bestimmten Zwecken Gase oder Gasgemische eingebracht werden.

In Böden werden Gase oder Gasgemische - nachfolgend als Treibgase bezeichnet - eingesetzt, um Stoffe bzw. Fluide zu bewegen. Beispielhaft genannt seien die Vertreibung von mit Schadstoffen beladenem Grundwasser, das zu einer Pumpstelle "getrieben" wird, wo das Wasser an die Oberfläche gepumpt wird, Nach erfolgter Reinigung kann das Wasser sodann wieder in den Boden zurückgegeben werden. Ein anderes Beispiel ist das Treiben von Rohöl in Speichergestein, um durch die sog. EOR (Enhanced Oil Recovery) eine größere Menge des im Gestein gespeicherten Rohöls gewinnen zu können. Als Treibgase hierfür kommen üblicherweise Stickstoff oder Kohlendioxid zur Anwendung.

Um festzustellen, ob und ggf. wo das verwendete Treibgas im Boden fließt bzw. hinfließt, wird dem Treibgas ein leicht analysierbares Gas - nachfolgend als Spurengas bezeichnet - zugesetzt und die Konzentration dieses Spurengases an der Erdoberfläche gemessen. Daraus lassen sich Rückschlüsse ziehen, wo das Treibgas tatsächlich hingeflossen ist. Als Spurengas wird bisher üblicherweise Helium verwendet. Das Heliummolekül ist verglichen mit der Molekülgröße der als Treibgas verwendeten Gase klein. Daher kann das Heliummolekül leichter durch Ritze, Spalte sowie Löcher im Boden bzw. Gestein diffundieren.

Helium ist in Gegenwart von Luft analysierbar. Da Luft zu ca. 79 % aus Stickstoff besteht, sind Spuren von Stickstoff, die möglicherweise als Treibgas aus dem Boden bzw. Gestein austreten, in Luft nicht nachweisbar. Helium dagegen kann noch in Spuren auch in Luft nachgewiesen werden. Das Auffinden von Helium an der Oberfläche verrät, wo das eigentliche Treibgas hingeflossen ist. Die Nachweisgrenze von Helium liegt mit den zum Stand der Technik zählenden Helium-Analysevorrichtungen bei ca. 5 mbar*I/s. Die Helium-Konzentration in der Umgebungsluft beträgt ca. 5,24 vppm. Ein Messgerät muss deshalb in der Lage sein, Konzentrationsunterschiede im Bereich weniger vppm zu erkennen. Mit der heute bekannten Messtechnik ist das problemlos möglich.

Helium ist jedoch ein sehr seltenes Gas, das einerseits vergleichsweise teuer ist und andererseits häufig nicht in ausreichenden Mengen zur Verfügung steht. Für Untersuchungen, bspw. zur EOR oder zum Austreiben von Wasser müssen jedoch große Mengen an Spurengas über längere Zeiträume von oftmals mehreren Monaten bereitgestellt werden können. Eine typische Gasmenge für die Austreibung von schadstoffbeladenem Wasser beträgt bspw. 1000 Nm³/h N₂ mit 10 Vol-% Helium, was einer Helium-Menge von 100 Nm³/h entspricht. Eine derartige Helium-Menge kann gegenwärtig in der Praxis oft nicht zur Verfügung gestellt werden, insbesondere deswegen, weil eine Vielzahl von Helium-verbrauchenden Konkurrenzanwendungen in der Medizintechnik existieren, bei denen u. U. Menschenleben von der Verfügbarkeit des Heliums abhängen. Es ist deshalb auch verständlich, dass Helium mit höherer Priorität solchen Anwendungen zugeteilt wird.

Vorgeschlagen wurde des Weiteren, andere reaktionsträge Gase, insbesondere andere Edelgase wie Argon, Krypton oder Xenon, als Spurengase in Betracht zu ziehen. Argon, das in großen Mengen aus Luftzerlegern gewonnen wird, weist in der Umgebungsluft einen Anteil von ca. 1 % auf. Aus diesem Grund sind Spuren von Argon, die bei der Anwendung als Spurengas auftreten, nicht nachweisbar. Bei den anderen vorgenannten Edelgasen kommt erschwerend hinzu, dass beim Nachweis Massenspektrometer verwendet werden müssen. Im Bereich der Spektrallinien dieser Gase werden aber auch Kohlenwasserstoffe angezeigt, aufgrund derer die Analyse verfälscht werden kann. Insbesondere bei der Verwendung in der EOR ist dies ein nicht akzeptabler Nachteil.

Aufgabe der vorliegenden Erfindung ist es, ein gattungsgemäßes Verfahren zum Einbringen eines Treibgases in Böden anzugeben, das die vorgenannten Nachteile vermeidet.

Zur Lösung dieser Aufgabe wird ein gattungsgemäßes Verfahren zum Einbringen eines Treibgases in Böden vorgeschlagen, das dadurch gekennzeichnet ist, dass als Spurengas Wasserstoff verwendet wird.

Weitere vorteilhafte Ausgestaltungen des erfindungsgemäßen Verfahrens zum Einbringen eines Treibgases in Böden, die Gegenstände der abhängigen Patentansprüche darstellen, sind **dadurch gekennzeichnet, dass**
- dem Treibgas zusätzlich zu dem Wasserstoff wenigstens ein weiteres Spurengas zugesetzt wird,
- als Treibgas Stickstoff, Stickstoff-reiche Gasgemische, Kohlendioxid, Kohlendioxid-reiche Gasgemische und/oder gesättigte Kohlenwasserstoffe, wie Methan, verwendet werden,
- der Anteil des Spurengases Wasserstoff an dem Treibgas-Spurengas-Gemisch maximal 10 Vol-%, vorzugsweise maximal 5 Vol-% beträgt,
- als weiteres Spurengas Helium verwendet wird,
- das Treibgas-Spurengas-Gemisch unmittelbar vor der Zuführung in den Boden vermischt wird und
- das Treibgas-Spurengas-Gemisch in einer Tiefe von wenigstens einem Meter unter der Erdoberfläche in den Boden injiziert wird.

Erfindungsgemäß wird nunmehr als Spurengas Wasserstoff verwendet. Während die Verwendung von Wasserstoff als Prüfgas zur Lecksuche und Dichtheitsprüfung bereits seit langem bekannt ist, wurde die Verwendung von Wasserstoff als Spurengas bisher nicht in Erwägung gezogen. Wasserstoff kann wegen seiner Explosionsgefahr in Mischung mit Luft nur in sehr speziellen Fällen als Spurengas zur Anwendung kommen.

In vorteilhafter Weise wird es in Form eines Formiergases - hierunter sind Wasserstoff-Stickstoff-Gasmischungen zu verstehen - mit einem Wasserstoff-Anteil von 5 % und einem Stickstoff-Anteil von 95 % verwendet. Nach ISO 10156 liegt die untere Explosionsgrenze bei 5,7 Vol-% Wasserstoff in Luft. Diese Explosionsgefahr muss jedoch definitiv beseitigt werden, um Wasserstoff gefahrlos als Spurengas einsetzen zu können. Es hat sich nunmehr überraschenderweise gezeigt, dass - eine richtige Handhabung des Wasserstoffes vorausgesetzt - Wasserstoff als Spurengas auch bei höheren Gehalten bis ca. 10 Vol-% ohne Gefährdung eingesetzt werden kann.

Untersuchungen haben ergeben, dass der als Spurengas verwendete Wasserstoff in Böden bzw. Gesteinen überraschenderweise wesentlich schneller diffundiert als die üblicherweise als Treibgas verwendeten Gase. Die auftretenden Wasserstoff-Konzentrationen sind folglich bereits in geringer Entfernung von der Injektionsstelle niedriger als in dem dem Boden zugeführten Treibgas-Spurengas-Gemisch. Offensichtlich tritt eine schnelle Entmischung des Treibgas-Spurengas-Gemisches ein, woraus eine geringere und damit unkritische Wasserstoff-Konzentration resultiert. Dieser Effekt lässt sich nunmehr dazu nutzen, Wasserstoff in höheren Konzentrationen als 5 % als Spurengas einzusetzen.

Tritt das Spurengas Wasserstoff an der Erdoberfläche aus, liegt seine Konzentration in der Luft um mehrere Größenordnungen unterhalb der unteren Explosionsgrenze, wenn die Injektionsstelle mindestens ca. 1 Meter unter der Erdoberfläche liegt. Denn tatsächlich ist bereits bei einer Diffusionslänge von einem Meter der WasserstoffGehalt von mehreren Vol-% auf wenige ppm gesunken. Somit ist eine Anhebung der Wasserstoff-Konzentration in dem Treibgas-Spurengas-Gemisch auf Werte von 10 Vol-% und mehr möglich, ohne dass Gefahr für die messenden Personen und/oder die unmittelbare Umgebung besteht.

Wasserstoff ist in Konzentrationen von weniger als 1 ppm in Luft nachweisbar. Damit erfüllt Wasserstoff die notwendigen Voraussetzungen als Spurengas:
- Wasserstoff ist normalerweise in der Umgebungsluft nur in geringen Konzentrationen von weniger als 1 ppm vorhanden, so dass auch Spurenmengen, die nachgewiesen werden, vom Spurengas stammen und zweifelsfrei nicht aus der Umgebung
- Wasserstoff ist im Bereich von < 1 ppm in Luft nachweisbar
- Wasserstoff ist bei Umgebungstemperatur nur gering reaktiv, so dass wenig bis keine Nebenreaktionen mit Böden bzw. Gesteinen stattfinden. Solche Reaktionen könnten das Messergebnis erheblich verfälschen
- Wasserstoff wird in großen Mengen hergestellt und ist in industrieller Umgebung im Regelfall leicht verfügbar zu machen
- Die für die praktische Realisierung des erfindungsgemäßen Verfahrens zum Einbringen eines Treibgases in Böden erforderlichen Wasserstoff-Mess- bzw.
- Analysegeräte sind aus dem Stand der Technik hinlänglich bekannt; einer Modifizierung dieser Geräte für den beabsichtigten Anwendungszweck bedarf es im Regelfall nicht

Wird das erfindungsgemäße Verfahren bei großen Ölfeldern zur EOR angewendet, kann es erforderlich sein, Wasserstoff und das Treibgas, bei dem es sich vorzugsweise um Stickstoff handeln wird, vor Ort zu mischen. In der Praxis dürfte die Obergrenze für den Verbrauch des Treibgas-Spurengas-Gemisches, das in Flaschen geliefert wird, bei etwa 50 Nm³/h liegen. Darüber hinausgehende Treibgas-Spurengas-Gemischmengen werden entsprechend einer vorteilhaften Ausgestaltung des erfindungsgemäßen Verfahrens durch Mischen von Treib- und Spurengas vor Ort hergestellt.

## Patentansprüche

1. Verfahren zum Einbringen eines Treibgases in Böden, wobei dem Treibgas ein oberhalb des Bodens bzw. der Erdoberfläche analysierbares Spurengas zugesetzt wird, **dadurch gekennzeichnet, dass** als Spurengas Wasserstoff verwendet wird.

2. Verfahren nach Anspruch 1, **dadurch gekennzeichnet, dass** dem Treibgas zusätzlich zu dem Wasserstoff wenigstens ein weiteres Spurengas zugesetzt wird.

3. Verfahren nach Anspruch 1 oder 2, **dadurch gekennzeichnet, dass** als Treibgas Stickstoff, Stickstoff-reiche Gasgemische, Kohlendioxid, Kohlendioxid-reiche Gasgemische und/oder gesättigte Kohlenwasserstoffe, wie Methan, verwendet werden.

4. Verfahren nach einem der vorhergehenden Ansprüche 1 bis 3, **dadurch gekennzeichnet, dass** der Anteil des Spurengases Wasserstoff an dem Treibgas-Spurengas-Gemisch maximal 10 Vol-%, vorzugsweise maximal 5 Vol-% beträgt.

5. Verfahren nach einem der vorhergehenden Ansprüche 2 bis 4, **dadurch gekennzeichnet, dass** als weiteres Spurengas Helium verwendet wird.

6. Verfahren nach einem der vorhergehenden Ansprüche 1 bis 5, **dadurch gekennzeichnet, dass** das Treibgas-Spurengas-Gemisch unmittelbar vor der Zuführung in den Boden vermischt wird.

7. Verfahren nach einem der vorhergehenden Ansprüche 1 bis 6, **dadurch gekennzeichnet, dass** das Treibgas-Spurengas-Gemisch in einer Tiefe von wenigstens einem Meter unter der Erdoberfläche in den Boden injiziert wird.
